# EUROPÄISCHE PATENTSCHRIFT

(11) **EP 2 961 981 B1**
(45) Veröffentlichungstag und Bekanntmachung des Hinweises auf die Patenterteilung: **07.11.2018**
(21) Anmeldenummer: 14706852.2
(22) Anmeldetag: 27.02.2014
(51) Int. Cl.: F03D 7/02, F03D 7/04

(54) **WINDENERGIEANLAGEN MIT VERBESSERTER LEISTUNGSRESERVENBEREITHALTUNG**
WIND TURBINE WITH IMPROVED POWER RESERVE SUPPLY
ÉOLIENNES À MISE À DISPOSITION AMÉLIORÉE DE LA RÉSERVE DE PUISSANCE

(30) Priorität: 01.03.2013 DE 102013203540
(43) Veröffentlichungstag der Anmeldung: 06.01.2016
(73) Patentinhaber: Senvion GmbH, 22297 Hamburg (DE)
(72) Erfinder: GEISLER, Jens, 24768 Rendsburg (DE); SCHRADER, Stefan, 24106 Kiel (DE); BLUHM, Roman, 22844 Norderstedt (DE); PETSCHE, Marc, 24809 Nübbel (DE)
(74) Vertreter: Glawe, Delfs, Moll
(86) Internationale Anmeldenummer: PCT/EP2014/053832
(87) Internationale Veröffentlichungsnummer: WO 2014/131831

(56) Entgegenhaltungen:
- EP-A1- 2 270 332
- WO-A2-2010/000648
- DE-A1-102009 037 239
- DE-A1-102011 081 795

## Beschreibung

Die Erfindung betrifft eine Windenergieanlage und ein Verfahren zum Bereitstellen einer Leistungsreserve. Ein von einem Windrotor angetriebener Generator der Windenergieanlage gibt elektrische Leistung ab. Ihr Betrieb wird kontrolliert von einer Steuerung, welche einen Eingang für eine gewünschte Leistungsreduktion aufweist.

Mit der steigenden Bedeutung von Windenergieanlagen bei der Erzeugung elektrischer Leistung in einem Stromnetz steigen auch die Anforderungen an die Windenergieanlagen, Systemdienstleistungen für das Stromnetz zu erbringen. Zu diesen Systemdienstleistungen zählt außer einer Bereitstellung von Blindleistung auch das Bereithalten von Reserveleistung, um so auf Anforderung des Netzbetreibers kurzfristig zusätzliche Energie in das Netz einspeisen zu können. Bei Windenergieanlagen treten hierbei zwei besondere Schwierigkeiten auf. Üblicherweise werden Windenergieanlagen nämlich bereits so betrieben, dass sie die maximal mögliche Leistung aus dem verfügbaren Wind erzeugen. Zum anderen hängt die Leistungserzeugung der Windenergieanlage von der zufälligen Stärke des Winds ab, kann also gar nicht gezielt verändert bzw. erhöht werden. Die Abhängigkeit von der Windstärke wirkt sich insbesondere im Teillastbetrieb der Windenergieanlage aus, denn hierbei wird der gesamte verfügbare Wind bereits in elektrische Leistung umgesetzt - eine Steigerung ist bei unveränderten Windbedingungen nicht möglich.

Im Volllastbetrieb hingegen weht zwar ein ausreichend starker Wind, der gegebenenfalls mehr Leistung erlauben würde, jedoch gibt die Windenergieanlage bereits ihre Nennleistung ab und kann schon daher die Leistungsabgabe nicht erhöhen.

Um dennoch Windenergieanlagen auch zur Bereitstellung von zusätzlicher Reserveleistung heranzuziehen, sind verschiedene Ansätze bekannt geworden. Ein erster Ansatz besteht darin, zur Bereitstellung von sehr kurzfristig wirkender sog. Regelleistung die im Windrotor und dem rotierenden Teil des Antriebsstrangs gespeicherte kinetische Energie zu nutzen. Konkret wird hierbei der Rotor verlangsamt, so dass die dabei frei werdende kinetische Energie als zusätzliche elektrische Leistung abgegeben werden kann (WO 2005/025026 A1). Dieses Konzept funktioniert jedoch nur zur sehr kurzfristigen Bereitstellung von zusätzlicher Leistung, da der Windrotor schnell an Drehzahl verliert und die Windenergieanlage in der Folge weniger Leistung als vorher abgibt.

Ferner ist es bekannt, Windenergieanlagen zur dauerhaften Abgabe von zusätzlicher Leistung in der Weise zu ertüchtigen, indem sie im Regelbetrieb mit einer suboptimalen Einstellung betrieben werden (Prillwitz, F. et al.: Primärregelung mit Windkraftanlagen, ITG-Workshop "Neue dezentrale Versorgungsstrukturen", Februar 2003, Frankfurt/Main). So wird vorgeschlagen, insbesondere im Teillastbetrieb, bei dem die Windenergieanlage herkömmlicherweise zur Erzeugung einer maximalen Leistung mit einem optimalen Blattwinkel betrieben wird, den Blattwinkel mit einem Offset zu versehen, so dass der optimale Wert verlassen wird. Die Windenergieanlage erzeugt damit weniger Leistung, als sie bei den gegebenen Windbedingungen an sich könnte (reduzierter Betrieb). Wenn im Bedarfsfall Reserveleistung zusätzlich abgegeben werden soll, wird das Offset verringert und der Blattwinkel zu seinem optimalen Wert hin verstellt. Dieses Konzept bietet den Vorteil, dass es im Prinzip dauerbetriebsfest ist und damit die Windenergieanlagen dauernd Reserveleistung bereitstellen können. Eine Erweiterung dieses Konzepts besteht darin, für verschiedene vorgesehene Reserveleistungen je eine eigene Kennlinie zu implementieren (DE 10 2011 081 795 A1). Das beschriebene Konzept gibt jedoch keine Ansätze dafür, wie das für einen stabilen Betrieb wichtige Übergangsverhalten zwischen reduziertem und nicht reduziertem Betrieb günstig gestaltet werden kann.

Ein weiteres Konzept zur dauerhaften Bereitstellung von Reserveleistung mittels eines suboptimalen Blattwinkels ist beschrieben in der WO 2010/000648 A2. Die Leistungsabgabe der Windenergieanlage kann um einen wählbaren Betrag beschränkt werden. Bei dem wählbaren Betrag kann es sich um einen festen Leistungswert oder um einen prozentualen Anteil handeln. Mit dem Aspekt der Verbesserung des Übergangsverhaltens befasst sich das Dokument nicht. Wenn ausgehend von einem zur Laufzeit ermittelten Leistungsangebot ein Pitchwinkel zur gezielten Reduktion der Leistungsabgabe ermittelt werden soll, so ergibt sich zunächst das Problem, das Leistungsangebot genau genug zu bestimmen. Weiterhin wird der auf diese Weise bestimmte "Reduktions-Pitchwinkel" idealerweise kontinuierlich variieren. Daraus würde jedoch eine kontinuierliche Aktivität des Pitchaktors resultieren. In der Folge ergibt sich ein beträchtlich erhöhter Verschleiß des Ein weiteres Beispiel aus dem Stand der Technik ist aus EP2270332 bekannt.

Ausgehend von dem zuletzt genannten Stand der Technik liegt der Erfindung die Aufgabe zugrunde, eine Windenergieanlage und ein Verfahren zu deren Betrieb anzugeben, welches eine Verbesserung der Bereitstellung von Reserveleistung erreicht, und zwar insbesondere im Hinblick auf eine Schonung der Windenergieanlage.

Die erfindungsgemäße Lösung liegt in den Merkmalen der unabhängigen Ansprüche. Vorteilhafte Weiterbildungen sind Gegenstand der abhängigen Ansprüche.

Vorgesehen ist ein Verfahren zum Bereitstellen einer Leistungsreserve beim Betrieb von Windenergieanlagen, die einen von einem Windrotor angetriebenen Generator zur Abgabe elektrischer Leistung sowie eine Steuerung dafür aufweisen, welche eine erste Kennlinie für einen Zusammenhang zwischen Schnelllaufzahl des Windrotors und Blattwinkel der Rotorblätter sowie einen Eingang für eine gewünschte Leistungsreduktion aufweist, wobei erfindungsgemäß vorgesehen sind ein Implementieren einer zweiten Kennlinie mit abweichenden Werten für den Blattwinkel für einen suboptimalen Betrieb, so dass eine vorbestimmte Leistungsreduktion erreicht ist, eine Verwenden der zweiten Kennlinie für die Steuerung, wenn Reserveleistung bereitgestellt werden soll (Bereitstellungsbetrieb), und ein Errechnen des Pitchwinkels mittels einer Mischung der ersten Kennlinie und der zweiten Kennlinie bei Anforderung von Reserveleistung (Aktivbetrieb). Hierbei erfolgt das Überblenden in der Weise, dass die mittels der beiden Kennlinien errechneten Werte zueinander nichtlinear gewichtet werden, wobei die Gewichtung nichtlinear von der angeforderten Reserveleistung abhängt.

Damit werden Vorteile erreicht, die über eine einfache allmähliche Überblendung weit hinausgehen. Denn mit der nichtlinearen Abhängigkeit der Gewichtung von der geforderten Reserveleistung wird dem Umstand Rechnung getragen, dass der Leistungsbeiwert des Rotors ebenfalls nichtlinear vom Blattwinkel abhängt. Vorzugsweise sollte der Zusammenhang zwischen Reserveleistung und Gewichtung möglichst genau invers zu dem Zusammenhang zwischen Blattwinkel und Rotorleistung sein. Es ist somit sogar ermöglicht, dass beliebige Punkte im nichtlinearen Kennfeld der Rotorleistung nur mithilfe zweier Kennlinien und einer Gewichtungsfunktion angefahren werden können. Die Erfindung bringt also auch Vorteile hinsichtlich einer Reduktion des benötigten Speicherplatzes und der Rechenzeit mit sich. Ferner kann dies kombiniert werden mit einer raschen Bereitstellung von Reserveleistung.

Dies basiert auf dem Gedanken, mittels der zweiten Kennlinie die Windenergieanlage optimal für den Reservebetrieb auszulegen und weiter mittels einer speziellen Kennlinienmischung das Übergangsverhalten von reduziertem und nicht reduziertem Betrieb zu verbessern, um so einen Material schonenden Betrieb der Windenergieanlage zu gewährleisten. Damit braucht bei der Auslegung der zweiten Kennlinie keine Rücksicht auf das Übergangsverhalten genommen zu werden, sie kann allein für den Dauerbetrieb optimiert sein. Für ein gleichmäßiges Übergangsverhalten, bspw. im Fall der Anforderung von Reserveleistung im Aktivbereich, sieht die Erfindung eine Mischung aus beiden Kennlinien vor. Damit kann eine graduelle Überblendung erreicht werden, wodurch sich ein harmonischer und stufenloser Übergang ergibt.

Das verbesserte Übergangsverhalten führt zu einem ruhigeren Lauf, wodurch sich auch eine Verringerung der Pitchaktivität insbesondere beim Übergang vom reduzierten zum nicht reduzierten Betrieb ergeben kann. Der aufgrund des verbesserten Übergangsverhaltens schonendere Betrieb für den Antriebsstrang ist von besonderem Vorteil für leistungsstarke Anlagen, wie sie typischerweise im Offshore-Einsatz vorgesehen sind. Denn zum einen sind diese Anlagen aufgrund ihrer hohen Leistung anfällig gegenüber zusätzlichen, parasitären Belastung, und zum anderen sind diese Anlagen wegen des erschwerten Zugangs meist aufwendig zu warten. Gerade für solche Anlagen ist daher eine Schonung dank des erfindungsgemäß verbesserten Verhaltens von besonderer Bedeutung.

Ein weiterer Vorteil der Erfindung ist, dass es die vorteilhafte Wirkung mit geringem Aufwand erreicht, wobei insbesondere keine zusätzliche Hardware oder kompliziert zu parametrierende Rechenmodelle erforderlich werden. In den meisten Fällen genügt es, die ohnehin vorhandene Programmsteuerung entsprechend zu erweitern. Damit eröffnet die Erfindung auch den Weg zur Nachrüstung älterer, bereits bestehender Windenergieanlagen.

Eine besonders zweckmäßige Ausführungsform für das nichtlineare Überblenden liegt in einer Wurzelfunktion, insbesondere einer Quadratwurzelfunktion. Dies sei an einem Beispiel erläutert: Wird beispielsweise eine Bereitstellung von 50 % der bereitgehaltenen Reserveleistung gefordert, so wird der dazu einzustellende Pitchwinkel berechnet aus der Quadratwurzel von 0,5 entsprechend dem 0,707-fachen aus der zweiten Kennlinie (Reservebetrieb) und dem dazu komplementären Wert von 1 - (Quadratwurzel von 0,5) entsprechend dem 0,293-fachen aus der ersten Kennlinie (nicht reduzierter Betrieb).

Der Wert für die Leistungsreduktion kann als Anteil übermittelt werden, insbesondere in Gestalt eines Prozentwerts der abgegebenen Leistung. Damit ist sichergestellt, dass die Leistungsreserve in einem kontrollierten und angemessenen Verhältnis zur verfügbaren Windleistung der Windenergieanlage steht. Der Gefahr einer Überlastung durch Vorgabe einer zu hohen Leistungsreserve bei nur schwachen Windverhältnissen wird damit entgegengewirkt. Alternativ kann auch ein fester Wert für die Leistungsreserve abgegeben sein.

Zweckmäßigerweise ist weiter vorgesehen, eine übergroße gewünschte Leistungsreduktion herzustellen, wobei unter "übergroß" ein Wert von mindestens 50 % der Nennleistung der Windenergieanlage verstanden wird. Damit ist es ermöglicht, durch eine entsprechend übergroße Leistungsreduktion die Windenergieanlage abzuregeln, insbesondere im Fall eines Auftretens von Überfrequenz.

Grundsätzlich ist es so, dass die zweite Kennlinie abhängig davon festgelegt ist, wie groß die vorgesehene Leistungsreserve ist. Dies kann in der Weise erfolgen, dass für jede eingestellte Leistungsreserve eine eigene, weitere Kennlinie bestimmt wird. Einfacher und vollkommen ausreichend ist es jedoch, wenn für mehrere unterschiedliche Leistungsreserven nur für eine von jenen eine Kennlinie bestimmt ist, und für die übrigen Leistungsreserven entsprechend eine Interpolation durchgeführt wird. Damit kann der Aufwand bei der Stellung der zweiten Kennlinie für den Reduktionsbetrieb vermindert werden, und dennoch wird mit dem erfindungsgemäßen Verfahren dank der nichtlinearen Überblendung ein ausreichend ruhiges Betriebsverfahren und harmonisches Übergangsverhalten erreicht.

Vorzugsweise sind die Kennlinien in Gestalt einer Lookup-Tabelle implementiert. Hier genügen ggf. schon wenige Stützstellen, um die erfindungsgemäß vorgesehene nichtlineare Gewichtungsfunktion abzubilden. Zwischen den Stützstellen kann ggf. linear interpoliert werden, ohne dass dadurch der nicht-lineare Zusammenhang der Gewichtung insgesamt verloren ginge. Es kann aber auch statt der Lookup-Tabelle eine direkte Berechnung aus Funktionswerden vorgesehen sein.

Mit Vorteil sieht das Verfahren vor, dass ein Signal für die Anforderung von Reserveleistung von extern, insbesondere einem Parkmaster, angelegt wird. Damit kann eine zentrale Steuerung der Reserveleistung erreicht werden. Dies ist insbesondere für den Betrieb der Windenergieanlagen in einem Windpark von Vorteil. Da es jedoch auch zu einem Kommunikationsausfall kommen kann, so dass keine Parameter insoweit von extern für die angeforderte Reserveleistung angelegt sind, ist vorzugsweise eine Wertspeicherung lokal vorgesehen. Damit kann auch bei Ausfall der Kommunikation auf Grundlage des letzten Wertes das Verfahren weitergeführt werden. Zweckmäßigerweise werden mehrere der vergangenen Werte gespeichert, so dass mit Vorteil daraus ein Mittelwertsignal gebildet werden kann. Dies ermöglicht eine dank der Mittelung glattere Betriebsweise im Fall des Kommunikationsausfalls.

Die Steuerung zur Abgabe der Reserveleistung kann zentral durchgeführt werden, so dass ein entsprechendes Signal - wie bereits erwähnt - von extern an die Windenergieanlage angelegt ist. Dies ist insbesondere von Vorteil beim Betrieb der Windenergieanlage in einem Windpark. Gerade im Hinblick auf einen Windpark hat es sich bewährt, wenn nicht alle, sondern lediglich nur ein Teil der Windenergieanlagen im Park eingestellt sind für die Abgabe der Reserveleistung.

Vorzugsweise ist an die Steuerung ferner ein Wert für eine Maximalleistung angelegt. Bei diesem Wert kann es sich insbesondere um einen solchen für eine Leistungsbegrenzung handeln, wie sie innerhalb des Windparks vorgegeben ist. Zweckmäßigerweise wird eine solche Leistungsbegrenzung zusätzlich zu der Reduktion für die vorzuhaltende Leistungsreserve berücksichtigt. Gegebenenfalls wird der aus der Leistungsbegrenzung resultierende Soll-Wert für die Leistung mit einem von extern angelegtem Soll-Wert verglichen, wobei dann das Minimum aus beiden Werten verwendet wird.

Alternativ oder zusätzlich kann aber auch vorgesehen sein, dass ein Maximalwert von extern, insbesondere an der übergeordneten Leitstelle oder Netzkontrollstelle, vorgegeben wird. Hierbei handelt es sich insbesondere um sog. "reduzierte Parksollwerte", womit die externe Stelle (insbesondere die Netzkontrollstelle) dem Park eine Leistungsbegrenzung vorgibt. Die Vorgabe einer Leistungsreserve bleibt davon unberührt, so dass sie bei Bedarf dennoch abgerufen werden kann. In diesem Fall ist entsprechend der Sollwert für die Parkleistung zusätzlich um den Wert für die vorzuhaltende Leistungsreserve zu verringern, damit im Bedarfsfall zusätzliche Reserveleistung eingespeist werden kann. Dabei bleibt die von extern vorgegebene Leistungsreduktion im Regelfall erhalten. Es soll aber nicht ausgeschlossen sein, dass im Bedarfsfall die externe Leistungsreduktion aufgehoben wird, um somit die zur Verfügung zu stellende Reserveleistung weiter zu erhöhen. Zweckmäßigerweise wird bei einer Leistungsbegrenzung vorzugsweise nur ein Teil der Windenergieanlagen des Windparks entsprechend reduziert betrieben, vorzugsweise solche, die sich bereits im Volllastbetrieb befinden. Damit wird eine unnötige Belastung der im Teillastbetrieb arbeitenden Windenergieanlagen mit dieser Regelungsfunktion vermieden.

Vorzugsweise ist ein Statikmodul vorgesehen, welches einen Wert für die vorzuhaltende Leistungsreserve auf Basis einer Netzfrequenz bestimmt. Ausgangspunkt ist ein Wert für die vorzuhaltende Leistungsreserve bei Nenn-Netzfrequenz. Bei Unterfrequenz wird dieser Wert kontinuierlich verringert, wenn die Frequenz die untere Grenze eines Toleranzbandes um die Netz-Nennfrequenz überschreitet, und zwar bis auf eine Leistungsreserve von Null. Umgekehrt wird bei Überfrequenz, also bei Frequenz oberhalb eines oberen Grenzwerts für das Toleranzband, die vorzuhaltende Leistungsreserve beträchtlich vergrößert, und zwar auf Werte von über 50 % der Nennleistung der Windenergieanlagen, um so im Fall eines Auftretens von Überfrequenzen eine wirksame Leistungsreduktion zu erreichen. Steigt die Frequenz trotz der beträchtlichen Leistungsreduktion weiter an, so erfolgt zweckmäßigerweise ein Abschalten der Windenergieanlage vom Netz.

Die Erfindung erstreckt sich ferner auf ein Verfahren zum Betreiben eines Windparks umfassend mehrere Windenergieanlagen, wie vorstehend beschrieben. Es wird auf nähere Erläuterungen oder vorstehende Beschreibung verwiesen.

Die Erfindung betrifft ferner eine Windenergieanlage bzw. mit entsprechenden Windenergieanlagen versehenen Windpark. Zur näheren Erläuterung wird auf die Beschreibung zu dem Verfahren verwiesen.

Die Erfindung wird nachfolgend unter Bezugnahme auf die beigefügte Zeichnung näher erläutert, in der ein vorteilhaftes Ausführungsbeispiel dargestellt ist. Es zeigen:
- Fig. 1: eine schematische Ansicht einer Windenergieanlage gemäß einem Ausführungsbeispiel der Erfindung;
- Fig. 2: eine Blockansicht eines Leistungsreduzierungsmoduls für die Windenergieanlage gemäß Figur 1;
- Fig. 3: eine Detailansicht zu einem Überblendmodul des Leistungsreduziermoduls gemäß Figur 2;
- Fig. 4: ein Diagramm mit zwei Kennlinien zur Pitchverstellung;
- Fig. 5: ein Diagramm zur Visualisierung des Potenzials der Leistungsreduktion; und
- Fig. 6: ein Diagramm, welches einen Ausschnitt eines praktischen Falls der Leistungsreduktion darstellt.

Eine Windenergieanlage, die in ihrer Gesamtheit mit der Bezugsziffer 1 bezeichnet ist, gemäß einem Ausführungsbeispiel der Erfindung umfasst einen Turm 10, auf dessen oberen Ende eine Gondel 13 in Azimutrichtung verschwenkbar angeordnet ist. Ein Windrotor 11 mit mehreren daran angeordneten Rotorblättern 12 ist drehbar an einer Stirnseite der Gondel 13 vorgesehen. Über eine Rotorwelle treibt er einen Generator 14 mit einem Umrichter 15 an zur Erzeugung elektrischer Leistung. Ferner ist in der Gondel 13 eine Steuerung 2 für den Betrieb der Windenergieanlage 1 vorgesehen. Die Windenergieanlage 1 ist vorzugsweise in einem Windpark mit mehreren anderen Windenergieanlagen 1, 1', 1" angeordnet, die über ein parkinternes Netz 9 untereinander und mit einem Parkmaster 5 verbunden sind. Die einzelne Windenergieanlage 1 ist hierbei über eine Anschlussleistung 19 im parkinternen Netz 9 verknüpft. Darüber wird die elektrische Leistung abgegeben wie auch Kommunikationssignale von und zur Windenergieanlage 1 bzw. dem Parkmaster 5 geführt.

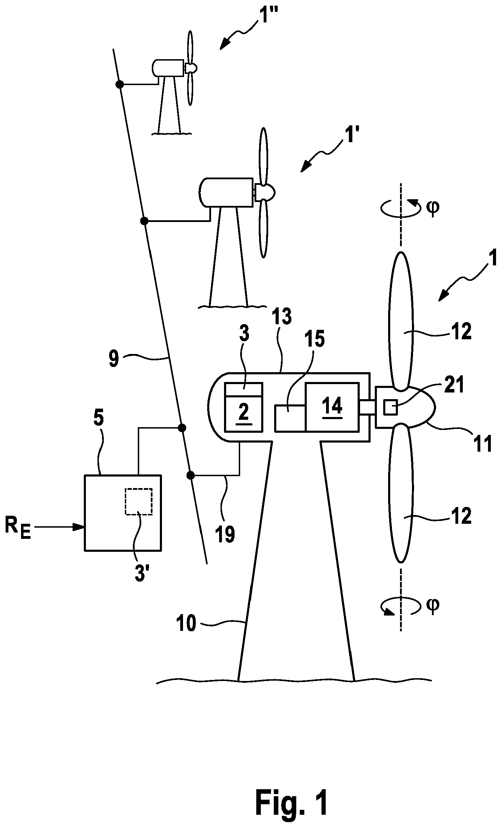

Der Windrotor 11 weist mehrere Rotorblätter 12 auf. Sie sind verstellbar an einer Nabe des Windrotors 11 angeordnet, so dass sie bezüglich ihres Blattwinkels ϕ verstellt werden können. Die Verstellung geschieht durch Verdrehen der Rotorblätter 12 um ihre Längsachse (in Fig. 1 gestrichelt dargestellt) mittels eines Pitchsystems 21.

Die Steuerung 2 dient zum Betrieb der Windenergieanlage anhand vorgegebener Parameter, die direkt an die Windenergieanlage 1 angelegt sind oder von dem Parkmaster 5 bzw. von einer übergeordneten Instanz, beispielsweise einem Betreiber (nicht dargestellt) eines Übertragungsnetzes, an die Windenergieanlage 1 bzw. den Windpark angeschlossen sind. Erfindungsgemäß vorgesehen ist für die Steuerung 2 eine Begrenzungseinheit 3. Alternativ zur dezentralen Anordnung an der Windenergieanlage 1 kann die Begrenzungseinheit 3 auch am Parkmaster 5 vorgesehen sein (s. gestrichelte Darstellung der Begrenzungseinheit 3').

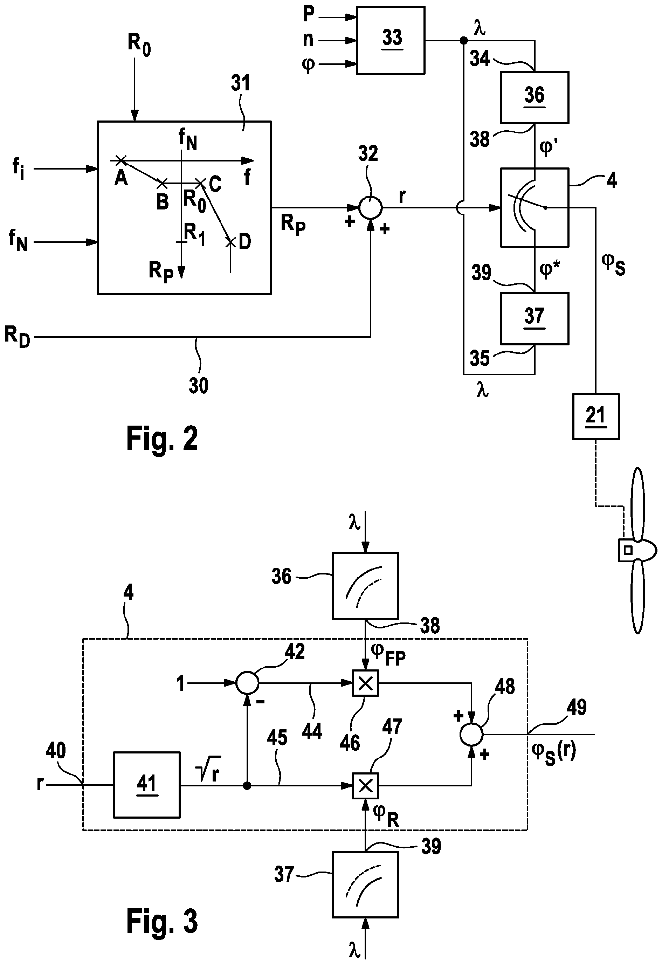

Zur Erläuterung des Aufbaus und Funktionsweise der Begrenzungseinheit 3 wird nun Bezug genommen auf Figur 2. Vorgesehen ist ein Vorgabeglied 31, welches eine Leistungsreserve anhand bestimmter Eingangsparameter festlegt. Im dargestellten Ausführungsbeispiel erfolgt die Bestimmung der Reserve abhängig von einer Netzfrequenz im Netz 9. Hierbei werden ein Wert für die tatsächlich im Netz 9 herrschende Frequenz als Parameter fᵢ und ein Wert für die Nominalfrequenz f_{N} als Referenzparameter angelegt. Weiter angelegt wird ein Wert für eine bei der Nominalfrequenz f_{N} bereitzuhaltende Leistungsreserve (Reduktionswert R₀). Im dargestellten Ausführungsbeispiel ist dies als eine Look-up-Tabelle ausgeführt. Sie umfasst mehrere Modi, die durch ihre jeweiligen Eckwerte gekennzeichnet sind. Ein erster Modus besteht in einer linearen Reduktion bis zu einem Reduktionswert R₀, und beginnt bei einem Frequenzwert deutlich unterhalb der Nominalfrequenz f_{N} (Stützstelle A), und noch keinerlei Reduktion, also voller Leistung (Stützstelle A) absinkend auf einen voreinstellbaren Reduktionswert R₀, welcher bei einer geringen Unterfrequenz erreicht ist (Stützstelle B). Die Stützstelle B markiert die untere Grenze eines Toleranzbandes, welche sich erstreckt bis zu einem Frequenzwert etwas oberhalb der Nominalfrequenz an f_{N} bei gleichbleibendem Reduktionsgrad (Stützstelle C). Bei darüberliegenden Frequenzen beginnt ein Überfrequenzbereich, in welchem die Windenergieanlage 1 die Leistungsabgabe weiter beträchtlich reduziert bis zum Reduktionswert R₁ (Stützstelle D). Wird dieser Wert erreicht, liegt eine so bedeutende Überfrequenz vor, dass die Windenergieanlage schließlich abgeschaltet wird.

Ein so von dem Vorgabeglied 31 ermittelter Wert für die Reduktionsleistung R_{P} wird schließlich ausgegeben und an eine Summationsstelle 32 angelegt. An die Summationsstelle 32 ist ferner angelegt ein Signal für eine verlangte (vom Parkmaster 5 bzw. von extern) Leistungsbegrenzung R_{D}, und zwar mittels einer Signalleitung 30. Durch Verknüpfung beider Werte wird von der Summationsstelle 32 ein Wert für eine aktuelle Reserveleistung ausgegeben, der bezeichnet ist als ein Reduktionsgrad r. Dieser Wert r wird nicht unmittelbar verwendet zur Verringerung der mittels des Windrotors 11 aus dem Wind gewonnenen mechanischen Leistung, sondern wird erfindungsgemäß einem nichtlinearen Mischmodul 4 zugeführt.

Das Mischmodul 4 dient dazu, einen Sollwert für einen Blattwinkel ϕ der Rotorblätter 12 anhand mehrerer, im dargestellten Ausführungsbeispiel zweier Eingangssignale sowie einem Steuersignal zu bestimmen. Üblicherweise ist es so, dass ein von der Pitch-Verstelleinrichtung einzustellender Blattwinkel ϕ der Rotorblätter 12 bestimmt wird in Abhängigkeit von einer Schnelllaufzahl λ. Die Schnelllaufzahl λ ist definiert als ein Verhältnis zwischen der Umlaufgeschwindigkeit der Rotorblätter 12 (gemessen an der Blattspitze) zur Windgeschwindigkeit, die auf den Windrotor 11 wirkt. Typischerweise wird beginnend vom Einschalten der Windenergieanlage bei verhältnismäßig geringen Windgeschwindigkeiten bis hin zu einer bestimmten Rotordrehzahl (Nenndrehzahl) der Blattwinkel ϕ konstant gehalten, so dass in der Folge die Drehzahl des Windrotors 11 sich proportional verhält zur Windgeschwindigkeit v. Oberhalb der Nenndrehzahl wird der Blattwinkel ϕ kontinuierlich verstellt, so dass die Drehzahl n des Windrotors 11 im Wesentlichen konstant bleibt (nämlich bei der Nenndrehzahl). Die Drehzahl des Windrotors 11 steigt also nicht mehr länger proportional mit der Windgeschwindigkeit v an. Die Schnelllaufzahl λ verringert sich daher mit zunehmender Windstärke.

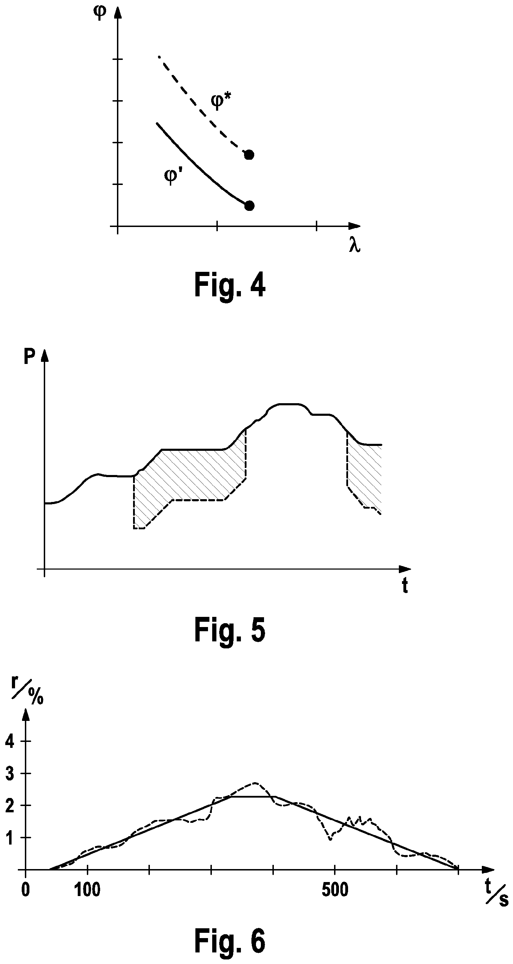

Die entsprechende Kennlinie für den Zusammenhang zwischen Pitchwinkel ϕ und der Schnelllaufzahl λ ist in Fig. 4 (mit durchgezogener Linie) dargestellt und ist in dem Block 36 (Fig. 2) implementiert. Dem Block 36 vorgeschaltet ist ein Schätzglied 33 für die Schnelllaufzahl λ. Es bestimmt einen geglätteten Wert für die Schnelllaufzahl λ, beispielsweise anhand von Parametern für die abgegebene Leistung P, die Drehzahl n des Windrotors 11 sowie einem Maß für den aktuell eingestellten Blattwinkel ϕ. Aus der somit mittels des Schätzglieds 33 geglätteten Schnelllaufzahl λ, die an einen Eingang 34 des Kennlinienblocks 36 angelegt ist, wird auf an sich bekannte Weise ein Sollwert ϕ' für den Blattwinkel der Rotorblätter 12 bestimmt. Dieser wird an einem Ausgang 38 des Kennlinienblocks 36 bereitgestellt und an einem Eingang des Mischmoduls 4 angelegt.

Erfindungsgemäß wird mittels desselben Werts λ für die geglättete Schnelllaufzahl ein zweiter Sollwert ϕ* bestimmt, und zwar anhand einer zweiten Kennlinie. Bei der zweiten Kennlinie handelt es sich um eine Reduktionskennlinie, bei der eine geringere Leistung als bei der ersten Kennlinie abgegeben wird, und zwar geringer um den Betrag der gewünschten Leistungsreserve (ausgedrückt durch den Reduktionsgrad R₀). Die zweite, um den Reduktionsgrad R₀ verringerte Kennlinie ist in Figur 4 mit gestrichelter Linie dargestellt. Anhand desselben Werts für die Schnelllaufzahl λ wird mittels des Block 37 unter Zugrundelegung der gestrichelt dargestellten zweiten Kennlinie ein zweiter Sollwert ϕ* ermittelt, an deren Ausgang 39 ausgegeben und am zweiten Eingang des Mischmoduls 4 angelegt. Die im Block 37 implementierte Kennlinie ist (mit gestrichelter Linie) in Fig. 4 dargestellt. Die Sollwerte ϕ' und ϕ* gemäß der ersten bzw. zweiten Kennlinie sind die beiden Werte, zwischen denen das Mischmodul 4 mischt, und zwar anhand des an ihn angelegten Werts r für den aktuellen Reduktionsgrad. Daraus bestimmt das Mischmodul 4 A einen Sollwert ϕ_{S} für den Blattwinkel, der zwischen den beiden Werten ϕ' und ϕ* liegt.

Das Mischmodul 4 ist näher dargestellt in Figur 3. An seinem Steuereingang 40 ist der Wert für den Reduktionsgrad r angelegt, welcher das Mischungsverhältnis bestimmt. Gemischt wird hierbei - wie vorstehend bereits erwähnt - zwischen den beiden Linienverläufen (gemäß Fig. 4), wie sie durch die für den Normalbetrieb gültige erste Kennlinie in Block 36 und die für den reduzierten Betrieb mit Leistungsreserve gültige zweite Kennlinie in Block 37 dargestellt sind. Das Mischmodul 4 ist dabei so ausgebildet, dass die beiden Kennlinien in einem nicht-linearen Verhältnis zueinander gemischt werden. Vorgesehen ist dazu ein Quadratwurzelblock 41, der einen Quadratwurzelwert für den Reduktionsgrad r bestimmt. Dieser Quadratwurzelwert ist über eine erste Signalleitung 45 angelegt an einen als erstes Gewichtungsglied 47 fungierenden Multiplikator, an dessen anderem Eingang der von dem Kennlinienblock 37 bereitgestellte Sollwert für den reduzierten Pitchwinkel ϕ* gemäß der zweiten, reduzierten Kennlinie angelegt ist. Dieser Sollwert wird mit dem über die Signalleitung 45 angelegten Faktor gewichtet. Dieser gewichtete Wert wird an einen Eingang eines Summationsglieds 48 angelegt. Ferner wird der von dem Block 41 ermittelte Quadratwurzelwert das Reduktionsverhältnis r an ein Komplementglied 42 angelegt, welches einen Komplementwert mittels einer Differenzrechnung zu 1 bildet. Dieser Komplementwert wird über eine Signalleitung 44 angelegt an einen weiteren Multiplikator, der als zweites Gewichtungsglied 46 fungiert. Dieser wichtet den von dem ersten Kennlinienblock 36 bereitgestellten Wert für einen Pitchwinkel ϕ' gemäß der ersten Kennlinie. Der somit gewichtete Wert wird an einen anderen Eingang des Summationsglieds 48 angelegt. Der vom Summationsglied 45 gebildete Summenwert ϕ_{S}(r) wird an dem Ausgang 49 des Mischmoduls 4 ausgegeben und schließlich als einzustellender Sollwert an die Pitchsteuerung 21 des Windrotors 11 angelegt.

Das Mischmodel 4 bewirkt damit eine nichtlineare, nämlich einer Wurzelfunktion folgende Überblendung zwischen der Kennlinie für den normalen Betrieb mit voller Leistung (ohne Reserve) einerseits und der zweiten Kennlinie für den Betrieb mit reduzierter Leistung, also bereitgestellter Reserve, andererseits. Ist beispielsweise für die Leistungsreserve ein Reduktionswert R₀ von 4 % vorgesehen (definiert durch Stützstelle B in dem Vorgabeglied 31), so ist die Kennlinie in dem Kennlinienblock 37 entsprechend dafür ausgelegt. Liegt die Frequenz im Netz 9 im Bereich des Toleranzbands (zwischen den Stützstellen B und C in dem Vorgabeglied 31), so beträgt der Reduktionsgrad für die von der Windenergieanlage abgehende Leistung jene 4%, so dass die volle Reserve zur Verfügung gestellt wird. Der Reduktionsgrad r ist in diesem Fall 1 und es wird der Pitchwinkel entsprechend der zweiten Kennlinie allein zur Bestimmung des Sollwerts ϕ_{S} verwendet. Tritt aber beispielsweise nun eine Situation ein, welche eine teilweise Mobilisierung der Reserve erfordert, beispielsweise eine Unterfrequenz genau zwischen den beiden Stützstellen A und B, so wird die Reduktion gemäß dem Vorgabeglied 31 halbiert. Der Reduktionsgrad r beträgt also 0,5. Erfindungsgemäß wird nunmehr zwischen den beiden in den Blöcken 36 und 37 implementierten Kennlinien übergeblendet, und zwar geschieht dies in der dargestellten Ausführungsform mittels der Wurzelfunktion. Dabei wird der Pitchwinkel gemäß der in Block 37 implementierten Reduktionskennlinie zu √0,5 = 0,707 aus der Reduktionskennlinie gemäß Block 37 und entsprechend komplementär zu 1 - √0,5 = 0,293 aus der ersten Kennlinie gemäß Block 36 bestimmt. Mit dieser nicht-linearen Überblendung unter Nutzung der Wurzelfunktion wird ein sanftes Überblenden erreicht, das insbesondere der Erkenntnis Rechnung trägt, dass die Windenergieanlage bei kleinen Einstellwinkeln weniger sensibel reagiert.

Der somit durch die erfindungsgemäße Überblendung unter Nutzung des Mischmoduls 4 bestimmte Sollwert für den Pitchwinkel ϕ_{S} wird an die Pitchsteuerung 21 angelegt, welche entsprechend die Pitchwinkel ϕ der Rotorblätter 12 auf an sich bekannte Weise einstellt.

Das mit der Erfindung erreichte Betriebsverhalten ist in Figuren 5 und 6 dargestellt. In Figur 6 ist mit durchgezogener Linie dargestellt ein angeforderter Reduktionswert R₀. Dieser ändert sich über der Zeit beginnend von 0% bei T = 50s und ansteigend wird er bis 2,5% bei etwas T = 320s und wiederum absinkend von diesem Wert bei T = 400s sinkt es wiederum auf 0 bei T = 700s. Der tatsächlich erreichte Reduktionsgrad r ist mittels der gestrichelten Linie visualisiert. Man erkennt, wie der tatsächlich eingestellte zwar mit gewissen Abweichungen, jedoch im Mittel recht genau dem eingestellten Reduktionsgrad folgt: Auffällig ist insbesondere, dass die Abweichungen besonders gering sind bei kleinen Reduktionsgraden. Damit wird die gewünschte Verbesserung des Übergangsverhaltens insbesondere zum Volllastbetrieb erreicht.

Das grundsätzliche Konzept der Leistungsreduktion zur Bereitstellung von Reserveleistungen ist in Figur 5 erläutert. Hier ist dargestellt die an sich nicht planbare, vom Wind abhängige Leistungseinspeisung P einer Windenergieanlage über der Zeit t. Man erkennt, wie die aus dem Wind entnehmbare und einzuspeisende Leistung (dargestellt mit durchgezogener Linie) über der Zeit stark variiert. Für jeweils zwei Zeitabschnitte, die in der Figur 5 durch gestrichelte Linien gekennzeichnet sind, wird die Bereitstellung von Reserveleistungen verlangt. Das bedeutet, dass die Windenergieanlage weniger Leistung abgibt (siehe gestrichelte Linie), als sie an sich auf Grund der Windbedingungen (durchgezogene Linie) könnte. Der dazwischen liegende Bereich (schraffiert) steht als Reserveleistung zur Verfügung und kann auf Abruf oder bei Auftreten bestimmter Parameter (beispielsweise einer Unterfrequenz) jederzeit verfügbar gemacht werden, und zwar unabhängig davon, ob der Wind gerade stark oder schwach weht.

An dem Parkmaster 5 ist ferner noch ein Eingang für eine angeforderte Reduzierung der Parkleistung R_{E} vorgesehen. Auf diese Weise kann eine übergeordnete Instanz, wie beispielsweise der Betreiber des Übertragungsnetzes, dem Windpark eine Leistungsverringerung von extern aufgeben. Der Parkmaster 5 kann dann die einzelne Windenergieanlagen 1, 1', 1" des Windparks entsprechend reduziert ansteuern, oder einfach entsprechende interne Reduktionssignale an die Windenergieanlagen 1, 1', 1" ausgeben, und zwar über deren Eingang R_{D} 30. Dann wird wie in der vorstehend beschriebenen Weise die Leistungsreduzierung durchgeführt.

## Patentansprüche

1. Verfahren zum Bereitstellen einer Leistungsreserve beim Betrieb von Windenergieanlagen (1, 1', 1"), die einen von einem Windrotor (11) angetriebenen Generator (14) zur Abgabe elektrischer Leistung sowie eine Steuerung (2) dafür aufweisen, welche eine erste Kennlinie (36) für einen Zusammenhang zwischen Schnelllaufzahl des Windrotors (11) und Blattwinkel seiner Rotorblätter (12) sowie einen Eingang (30) für eine gewünschte Leistungsreduktion aufweist, mit den Schritten
- Implementieren einer zweiten Kennlinie (37) mit abweichenden Blattwinkeln für einen suboptimalen Betrieb, so dass eine vorbestimmte Leitungsreduktion erreicht ist, und
- Verwenden der zweiten Kennlinie (37) für die Steuerung (2), wenn Reserveleistung (Bereitstellungsbetrieb) bereitgestellt werden soll,
**dadurch gekennzeichnet, dass**
- beim Anfordern von Reserveleistung (Aktivbetrieb) der Blattwinkel berechnet wird mittels einer Mischung der zweiten Kennlinie (37) und der ersten Kennlinie (36), und zwar mittels eines Mischmoduls (4),
- wobei die Mischung erfolgt durch ein Überblenden zwischen den beiden Werten für die Blattwinkel in der Weise, dass die errechneten Werte für die Blattwinkel zueinander nichtlinear gewichtet werden, wobei die Gewichtung nichtlinear von der angeforderten Reserveleistung abhängt.

2. Verfahren nach Anspruch 1, **dadurch gekennzeichnet, dass** die nichtlineare Gewichtung der beiden Blattwinkel mittels einer Wurzelfunktion erfolgt, insbesondere mittels einer Quadratwurzelfunktion.

3. Verfahren nach einem der vorangehenden Ansprüche, **dadurch gekennzeichnet, dass** die zweite Kennlinie (37) abhängig von einer einstellbaren Leistungsreserve bestimmt wird.

4. Verfahren nach Anspruch 3, **dadurch gekennzeichnet, dass** für jede eingestellte Leistungsreserve eine eigene, weitere Kennlinie bestimmt wird.

5. Verfahren nach Anspruch 3, **dadurch gekennzeichnet, dass** für mehrere Leistungsreserven nur für eine der Leistungsreserven eine Kennlinie bestimmt ist und für die übrigen Leistungsreserven interpoliert wird.

6. Verfahren nach einem der vorangehenden Ansprüche, **dadurch gekennzeichnet, dass** bei einer Überfrequenz eine übergroße Leistungsreduktion erfolgt.

7. Verfahren nach einem der vorangehenden Ansprüche, **dadurch gekennzeichnet, dass** die Leistungsreserve als ein Anteil der aktuell abgegebenen Leistung der Windenergieanlage (1) bestimmt ist.

8. Verfahren nach einem der vorangehenden Ansprüche, **dadurch gekennzeichnet, dass** das Bestimmen der Leistungsreserve und des Überblendens zentral, vorzugsweise bei einem Parkmaster (5), erfolgt für mehrere Windenergieanlagen (1, 1', 1").

9. Verfahren nach Anspruch 8, **dadurch gekennzeichnet, dass** nur ein Teil der Windenergieanlagen (1, 1', 1'') eines Windparks vom Parkmaster (5) entsprechend gesteuert wird.

10. Verfahren nach einem der vorangehenden Ansprüche, **gekennzeichnet durch** Berücksichtigen einer Obergrenze für die abgegebene Leistung.

11. Verfahren nach Anspruch 10, **gekennzeichnet durch** Vorgeben der Obergrenze von extern.

12. Verfahren nach einem der vorangehenden Ansprüche, **dadurch gekennzeichnet, dass** die Kennlinien in Gestalt von Lookup-Tabelle implementiert sind.

13. Verfahren zum Betreiben eines Windparks umfassend einen Parkmaster (5) und eine Mehrzahl von Windenergieanlagen (1, 1', 1''), die einen von einem Windrotor (11) angetriebenen Generator (14) zur Abgabe elektrischer Leistung sowie eine Steuerung (2) dafür aufweisen, welche eine erste Kennlinie (36) für einen Zusammenhang zwischen Schnelllaufzahl des Windrotors (11) und Blattwinkel seiner Rotorblätter (12) sowie einen Eingang (30) für eine gewünschte Leistungsreduktion aufweist, mit den Schritten
- Implementieren einer zweiten Kennlinie (37) mit abweichenden Blattwinkeln für einen suboptimalen Betrieb, so dass eine vorbestimmte Leitungsreduktion erreicht ist, und
- Verwenden der zweiten Kennlinie (37) für die Steuerung (2), wenn Reserveleistung (Bereitstellungsbetrieb) bereitgestellt werden soll,
**dadurch gekennzeichnet, dass**
- beim Anfordern von Reserveleistung (Aktivbetrieb) der Blattwinkel berechnet wird mittels einer Mischung der zweiten Kennlinie (37) und der ersten Kennlinie (36), und zwar mittels eines Mischmoduls,
- wobei die Mischung erfolgt durch ein Überblenden zwischen den beiden Werten für die Blattwinkel in der Weise, dass die errechneten Werte für die Blattwinkel zueinander nichtlinear gewichtet werden, wobei die Gewichtung nichtlinear von der angeforderten Reserveleistung abhängt.

14. Verfahren nach Anspruch 13, **dadurch gekennzeichnet, dass** es nach einem der Ansprüche 2 bis 12 weitergebildet ist.

15. Windenergieanlage mit einem von einem Windrotor (11) angetriebenen Generator (14) zur Abgabe elektrischer Leistung sowie einer Steuerung (2), welche einen ersten Kennlinienblock (36) mit einer ersten Kennlinie für einen Zusammenhang zwischen Schnelllaufzahl des Windrotors (11) und Blattwinkel seiner Rotorblätter (12) sowie einen Eingang für eine gewünschte Leistungsreduktion aufweist,
die Steuerung (2) weiter einen Block (37) für eine zweite Kennlinie, welche abweichende Blattwinkel für einen suboptimalen Betrieb implementiert hat,
**dadurch gekennzeichnet, dass**
und ein Mischmodul (4) umfasst, an das der erste Kennlinienblock (36) sowie der zweite Kennlinienblock (37) angeschlossen sind und das dazu ausgebildet ist, bei Anforderung von Reserveleistung die Blattwinkel zu berechnen mittels einer Überblendung zwischen der zweiten Kennlinie und der ersten Kennlinie, wobei das Überblenden in der Weise implementiert ist, dass die gemäß der ersten und zweiten Kennlinien bestimmten Werte für die Blattwinkel zueinander nichtlinear gewichtet sind, wobei die Gewichtung nichtlinear von der angeforderten Reserveleistung abhängt.

16. Windenergieanlage nach Anspruch 15, **dadurch gekennzeichnet, dass** die Steuerung (2) nach einem der Ansprüche 2 bis 12 weitergebildet ist.

17. Windpark umfassend einen Parkmaster (5) sowie eine Mehrzahl von Windenergieanlagen (1, 1', 1"), **dadurch gekennzeichnet, dass** die Windenergieanlagen (1, 1', 1") nach einem der Ansprüche 15 oder 16 ausgebildet sind.

## Claims

1. Method for providing a power reserve when operating wind turbines (1, 1', 1"), which have a generator (14), which is driven by a wind rotor (11) and is intended for delivering electrical power, and also a controller (2) for it, which has a first characteristic (36) for a relationship between the tip-speed ratio of the wind rotor (11) and the blade angle of its rotor blades (12) and also an input (30) for a desired power reduction, comprising the steps of
- implementing a second characteristic (37) with different blade angles for suboptimal operation, so that a predetermined power reduction is achieved, and
- using the second characteristic (37) for the controller (2) when reserve power (standby operation) is to be provided,
**characterized in that**
- when reserve power is requested (active operation), the blade angle is calculated by means of a mixture of the second characteristic (37) and the first characteristic (36), to be precise by means of a mixing module (4),
- wherein the mixing is performed by a cross-fading between the two values for the blade angles in such a way that the calculated values for the blade angles are weighted nonlinearly in relation to one another, the weighting depending nonlinearly on the reserve power requested.

2. Method according to Claim 1, **characterized in that** the nonlinear weighting of the two blade angles is performed by means of a root function, in particular by means of a square root function.

3. Method according to one of the preceding claims, **characterized in that** the second characteristic (37) is determined depending on a power reserve that can be set.

4. Method according to Claim 3, **characterized in that**, for each power reserve that is set, an own, further characteristic of its own is determined.

5. Method according to Claim 3, **characterized in that**, for a number of power reserves, a characteristic is only determined for one of the power reserves and is interpolated for the other power reserves.

6. Method according to one of the preceding claims, **characterized in that**, in the case of an overfrequency, an oversized power reduction is performed.

7. Method according to one of the preceding claims, **characterized in that** the power reserve is determined as a fraction of the currently delivered power of the wind turbine (1).

8. Method according to one of the preceding claims, **characterized in that** the determination of the power reserve and the cross-fading are performed centrally, preferably at a farm master (5), for a number of wind turbines (1, 1', 1").

9. Method according to Claim 8, **characterized in that** only some of the wind turbines (1, 1', 1") of a wind farm are correspondingly controlled by the farm master (5).

10. Method according to one of the preceding claims, **characterized by** taking into account an upper limit for the power delivered.

11. Method according to Claim 10, **characterized by** externally prescribing the upper limit.

12. Method according to one of the preceding claims, **characterized in that** the characteristics are implemented in the form of a lookup table.

13. Method for operating a wind farm comprising a farm master (5) and a plurality of wind turbines (1, 1', 1"), which have a generator (14), which is driven by a wind rotor (11) and is intended for delivering electrical power, and also a controller (2) for it, which has a first characteristic (36) for a relationship between the tip-speed ratio of the wind rotor (11) and the blade angle of its rotor blades (12) and also an input (30) for a desired power reduction, comprising the steps of
- implementing a second characteristic (37) with different blade angles for suboptimal operation, so that a predetermined power reduction is achieved, and
- using a second characteristic (37) for the controller (2) when reserve power (standby operation) is to be provided,
**characterized in that**
- when reserve power is requested (active operation), the blade angle is calculated by means of a mixture of the second characteristic (37) and the first characteristic (36), to be precise by means of a mixing module,
- the mixing being performed by a cross-fading between the two values for the blade angles in such a way that the calculated values for the blade angles are weighted nonlinearly in relation to one another, the weighting depending nonlinearly on the reserve power requested.

14. Method according to Claim 13, **characterized in that** it is developed according to one of Claims 2 to 12.

15. Wind turbine with a generator (14) driven by a wind rotor (11) and intended for delivering electrical power and also a controller (2), which has a first characteristic block (36) with a first characteristic for a relationship between the tip-speed ratio of the wind rotor (11) and the blade angle of its rotor blades (12) and also an input for a desired power reduction,
the controller (2) also a block (37) for a second characteristic, which has implemented different blade angles for suboptimal operation,
**characterized in that**
and comprises a mixing module (4), to which the first characteristic block (36) and the second characteristic block (37) are connected and which is designed to calculate the blade angles when reserve power is requested, by means of a cross-fading between the second characteristic and the first characteristic, the cross-fading being implemented in such a way that the values for the blade angles determined according to the first and second characteristics are weighted nonlinearly in relation to one another, the weighting depending nonlinearly on the reserve power requested.

16. Wind turbine according to Claim 15, **characterized in that** the controller (2) is developed according to one of Claims 2 to 12.

17. Wind farm comprising a farm master (5) and a plurality of wind turbines (1, 1', 1"), **characterized in that** the wind turbines (1, 1', 1") are designed according to either of Claims 15 and 16.

## Revendications

1. Procédé pour mettre à disposition une réserve de puissance lors du fonctionnement d'aérogénérateurs (1, 1', 1''), lesquels possèdent un générateur (14) entraîné par un rotor d'éolienne (11) pour délivrer de l'énergie électrique ainsi qu'une commande (2) à cet effet, laquelle possède une première courbe caractéristique (36) pour une relation entre une vitesse de rotation rapide du rotor d'éolienne (11) et l'angle de pale de ses pales de rotor (12) ainsi qu'une entrée (30) pour une réduction de puissance souhaitée, comprenant les étapes suivantes
- mise en oeuvre d'une deuxième courbe caractéristique (37) avec des angles de pale différents pour un fonctionnement suboptimal, de sorte qu'une réduction de puissance prédéterminée soit atteinte, et
- utilisation de la deuxième courbe caractéristique (37) pour la commande (2) lorsqu'une puissance de réserve (mode de mise à disposition) doit être mise à disposition,
**caractérisé en ce que**
- lors de la demande de la puissance de réserve (mode actif), l'angle de pale est calculé au moyen d'un mélange de la deuxième courbe caractéristique (37) et de la première courbe caractéristique (36), et ce au moyen d'un module mélangeur (4),
- le mélange s'effectuant par une fusion entre les deux valeurs pour l'angle de pale de telle sorte que les valeurs calculées pour l'angle de pale sont pondérées non linéairement entre elles, la pondération ayant une dépendance non linéaire à la puissance de réserve demandée.

2. Procédé selon la revendication 1, **caractérisé en ce que** la pondération non linéaire des deux angles de pale s'effectue au moyen d'une fonction de racine, notamment au moyen d'une fonction de racine carrée.

3. Procédé selon l'une des revendications précédentes, **caractérisé en ce que** la deuxième courbe caractéristique (37) est déterminée en fonction d'une réserve de puissance réglable.

4. Procédé selon la revendication 3, **caractérisé en ce qu'**une courbe caractéristique supplémentaire propre est déterminée pour chaque réserve de puissance réglée.

5. Procédé selon la revendication 3, **caractérisé en ce que** pour plusieurs réserves de puissance, une courbe caractéristique n'est déterminée que pour l'une des réserves de puissance et interpolée pour les autres réserves de puissance.

6. Procédé selon l'une des revendications précédentes, **caractérisé en ce qu'**en présence d'une surfréquence, une sur-réduction de la puissance est effectuée.

7. Procédé selon l'une des revendications précédentes, **caractérisé en ce que** la réserve de puissance est déterminée en tant que part de la puissance actuellement délivrée de l'aérogénérateur (1) .

8. Procédé selon l'une des revendications précédentes, **caractérisé en ce que** la détermination de la réserve de puissance et de la fusion s'effectue de manière centralisée, de préférence au niveau d'un maître de parc (5), pour plusieurs aérogénérateurs (1, 1", 1").

9. Procédé selon la revendication 8, **caractérisé en ce que** seule une partie des aérogénérateurs (1, 1', 1") d'un parc éolien est commandée en conséquence par le maître de parc (5).

10. Procédé selon l'une des revendications précédentes, **caractérisé par** la prise en compte d'une limite supérieure pour la puissance délivrée.

11. Procédé selon la revendication 10, **caractérisé par** la prédéfinition de la limite supérieure depuis l'extérieur.

12. Procédé selon l'une des revendications précédentes, **caractérisé en ce que** les courbes caractéristiques sont mises en oeuvre sous la forme d'un tableau de conversion.

13. Procédé d'exploitation d'un parc éolien comprenant un maître de parc (5) et une pluralité d'aérogénérateurs (1, 1', 1"), lesquels possèdent un générateur (14) entraîné par un rotor d'éolienne (11) pour délivrer de l'énergie électrique ainsi qu'une commande (2) à cet effet, laquelle possède une première courbe caractéristique (36) pour une relation entre une vitesse de rotation rapide du rotor d'éolienne (11) et l'angle de pale de ses pales de rotor (12) ainsi qu'une entrée (30) pour une réduction de puissance souhaitée, comprenant les étapes suivantes
- mise en oeuvre d'une deuxième courbe caractéristique (37) avec des angles de pale différents pour un fonctionnement suboptimal, de sorte qu'une réduction de puissance prédéterminée soit atteinte, et
- utilisation de la deuxième courbe caractéristique (37) pour la commande (2) lorsqu'une puissance de réserve (mode de mise à disposition) doit être mise à disposition,
**caractérisé en ce que**
- lors de la demande de la puissance de réserve (mode actif), l'angle de pale est calculé au moyen d'un mélange de la deuxième courbe caractéristique (37) et de la première courbe caractéristique (36), et ce au moyen d'un module mélangeur,
- le mélange s'effectuant par une fusion entre les deux valeurs pour l'angle de pale de telle sorte que les valeurs calculées pour l'angle de pale sont pondérées non linéairement entre elles, la pondération ayant une dépendance non linéaire à la puissance de réserve demandée.

14. Procédé selon la revendication 13, **caractérisé en ce qu'**il est perfectionné selon l'une des revendications 2 à 12.

15. Aérogénérateur comprenant un générateur (14) entraîné par un rotor d'éolienne (11) pour délivrer de l'énergie électrique ainsi qu'une commande (2), laquelle possède un premier bloc de courbe caractéristique (36) avec une première courbe caractéristique pour une relation entre une vitesse de rotation rapide du rotor d'éolienne (11) et l'angle de pale de ses pales de rotor (12) ainsi qu'une entrée pour une réduction de puissance souhaitée,
la commande (2) en outre un bloc (37) pour une deuxième courbe caractéristique qui a mis en oeuvre des angles de pale différents pour un fonctionnement suboptimal,
**caractérisé en ce que**
et comprend un module mélangeur (4) auquel sont raccordés le premier bloc de courbe caractéristique (36) ainsi que le deuxième bloc de courbe caractéristique (37) et qui est configuré pour, lors d'une demande de la puissance de réserve, calculer l'angle de pale au moyen d'une fusion entre la deuxième courbe caractéristique et la première courbe caractéristique, la fusion étant mise en oeuvre de telle sorte que les valeurs pour l'angle de pale déterminées selon la première courbe caractéristique et la deuxième courbe caractéristique sont pondérées non linéairement entre elles, la pondération ayant une dépendance non linéaire à la puissance de réserve demandée.

16. Aérogénérateur selon la revendication 15, **caractérisé en ce que** la commande (12) est perfectionnée selon l'une des revendications 2 à 12.

17. Parc éolien comprenant un maître de parc (5) et une pluralité d'aérogénérateurs (1, 1', 1"), **caractérisé en ce que** les aérogénérateurs (1, 1', 1") sont réalisés selon l'une des revendications 15 et 16.
